# EUROPEAN PATENT SPECIFICATION

(11) **EP 1 669 619 B1**
(45) Date of publication and mention of the grant of the patent: **31.07.2013**
(21) Application number: 05111721.6
(22) Date of filing: 06.12.2005
(51) Int. Cl.: F16C 33/80

(54) **A sealing unit for the bearing of the hub of a wheel**
Dichtungseinheit für die Lagerung einer Radnabe eines Rads
Moyen d'étanchéité pour un palier de moyeu d'une roue

(30) Priority: 07.12.2004 IT TO20040860
(43) Date of publication of application: 14.06.2006
(73) Proprietor: RFT S.p.A., 10121 Torino (IT)
(72) Inventor: Foti, Claudio, 14010 Dusino San Michele (Asti) (IT)
(74) Representative: Tedeschini, Luca

(56) References cited:
- DE-A1- 19 916 934
- US-A- 5 944 321

## Description

The present invention refers a sealing unit for bearings of heavy motor vehicle wheel hubs.

With bearings of wheels hubs it is known to use sealing units for hermetically sealing the annular gap defined between the bearing races.

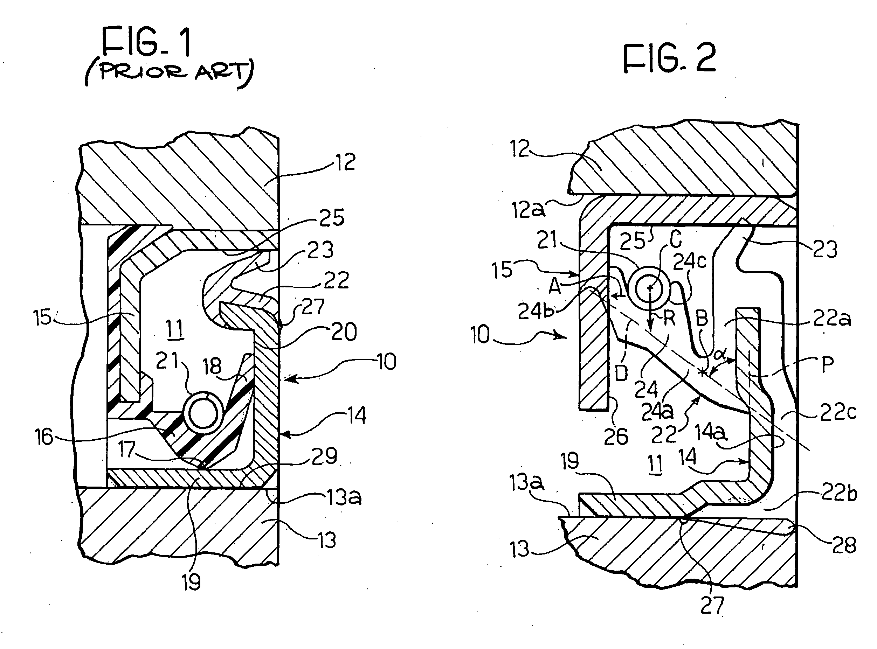

Figure 1 shows a cross-section of a conventional sealing unit 10, which serves to seal an annular gap 11 between the races 12 and 13 of a bearing. The sealing unit 10 comprises a first metallic annular shield 14 (called "*flinger*") secured to the radially inner, stationary race 13 of the bearing and a second metallic annular shield 15 secured to the radially outer, rotating race 12 of the bearing. Fixed by vulcanization to the stationary shield 15 is a sealing gasket 16 of elastomeric material with a V shape having two sealing lips 17, 18 slidingly engaging the opposite shield 14. The radial sealing lip 17 is engaged against a cylindrical axial portion 19 of the shield 14. The axial sealing lip 18 is elongated and flexible and slidingly engages a radial wall portion 20 of the shield 14. Contact of the radial lip 17 is usually ensured by a circumferential spring 21.

Sealing devices of this type carry out the dual task of:
- preventing external polluting agents (water, dust, mud) from entering the inner parts of the bearing where the rolling elements (not shown) are located and, simultaneously,
- preventing any leak of the lubricant grease that is normally confined within the inner ambient of the bearing so as to lubricate the surfaces involved in the rolling.

A gasket 22 with a radial sealing lip 23 sliding against a cylindrical axial portion 25 of the shield 15 is fixed by vulcanization to the end of the shield 14 facing the outer race 12. The shield 14 is made of stainless steel so as not to be affected by contaminating agents to which the axially outer side of the bearing is exposed (to the right in figure 1).

In order to improve static sealing action of the unit 10, and more particularly to prevent leaks from occurring at the interface between the inner race 13 and the shield 14, between these two elements a rubber film 29 (about 5 microns thick) is interposed. This film, known in the field as "Boretite", covers possible scratches on the inner race which may constitute passageways for external fluids or the lubricant within the bearing.

It has been noticed that a sealing unit of the above mentioned type involves high manufacturing costs, both for the choice of the material (stainless steel) constituting the flinger 14 and the need to carry out two distinct vulcanization steps to fix the gaskets 16 and 22 onto the two shields 14 and 15 and to apply the rubber film 29. Furthermore, many finished pieces exhibit rubber flashes 27 protruding from the gasket 22 along the outer surface of the flinger 14 due to an imperfect clamping of the mould in which the gasket 22 is over-moulded onto the flinger. A defect of this kind is not accepted by many vehicle manufactures, and, consequently, there is a lot of scrap. In addition, the elastomeric material of the gasket 22 does not firmly adhere to stainless steel. As a result, the attachment of the gasket 22 to the flinger is problematic. This can jeopardize efficiency of the sealing unit. As will be understood, a defective sealing unit adversely affects the life of the bearing on which it is mounted, especially if the bearing has to work in an ambient where there is a great quantity of polluting agents, such as is the case of wheel hub bearings on heavy motor vehicles.

US 5 944 321 A **discloses a sealing unit as defined in the preamble of claim 1.**

It is a general object of the present invention to provide an improved sealing unit capable of obviating the above-discussed drawbacks. Above all, it is desired to provide a sealing unit less expensive as compared to the past, but capable of assuring an efficient sealing action for a mileage of 1.600.000 km, as required by certain heavy motor vehicle manufacturers. Another object of the invention is to provide a unit capable of applying a predetermined and constant sealing force, substantially independent of minor variations of the relative axial distance between the two shields and of the wear of the sealing lips.

These and other objects and advantages, that will be better understood herein after, are attained according to the present invention by a sealing unit having the features defined in the appended claims.

The features and the advantages of the invention will appear from the detailed description of the embodiment thereof, given by way of example, reference being made to the accompanying drawings, provided by way of non-limitative indication, in which:
Figure 1 is a partial axial cross-sectional view of a sealing unit of conventional design mounted in a bearing; and
Figure 2 is a partial axial cross-sectional view of a sealing unit according to the present invention, mounted in a bearing.

Referring now to Figure 2, and using the same reference numbers already used to indicate same or similar parts discussed with reference to Figure 1, a sealing unit according to the invention comprises a single annular gasket 22 of elastomeric material fixed by way of vulcanization to a rigid annular shield 14 mounted to an inner stationary race 13 of a bearing. The shield 14 has a substantially L-shaped cross-section with a cylindrical axial portion 19 fixed to a coaxial, cylindrical surface 13a of the inner race 13, and a radial wall portion 20 extending towards the outer race 12 of the bearing. Mounted in this outer race 12 is a metallic annular shield 15 having a substantially L-shaped cross-section with a cylindrical axial portion 25 fixed to a coaxial, cylindrical surface 12a of the outer race 12, and a radial wall portion 26 extending towards the inner stationary bearing race 13.

The annular gasket 22 forms, as a single piece:
- a radially outer portion 22a exhibiting an overall V-shaped cross-section, with a first radial sealing lip 23 extending in a radially outer direction so as to slide against the axial cylindrical portion 25 of the opposite shield 15, and a second, axial sealing lip 24 (described in detail hereinafter) sliding against the radial wall 26 of the shield 15;
- a radially inner portion 22b with a further, static sealing lip 28 projecting in a radially inner direction so as to seal from the outside the interface zone between the axial portion 19 of shield 14 and the inner race 13;
- a covering layer 22c joining the portions 22a and 22b, and covering continuously from the outside the radial surface 14a of the flinger 14 on a side facing the outside of the bearing.

It is to be noted that in Figure 2 the various lips of the gasket 22 are shown in their non-deformed conditions.

The axial sealing lip 24 widens in extending from a root portion 24a in a radially outer and axially inner oblique direction and slidingly contacts the wall 26 by means of a free end edge 24b.

In order to exert a predetermined and constant sealing pressure against the wall 26, the lip 24 has a radial groove 24c around its outer circumference. Groove 24c serves to accommodate a circumferential spring 21 that exerts a radial compression R onto the lip 24. This compression is in part transferred as axial pressure A against the wall 26 owing to the inclination of the lip 24.

In order to exploit the above-described structure, the two following conditions are to be met:
- the circumferential groove 24c has a centre of curvature C substantially axially aligned with the contact edge 24b, and
- the root portion 24a is so shaped as to form an elastic hinge with a centre of rotation B located on an ideal dotted line D passing through the contact edge 24b and forming an angle α ranging between about 20° and about 60° with respect to a radial plane P.

Whilst it is not desired to be bound to any specific theory in this connection, tests carried out by the Applicant show that, as a result of the above arrangement, and particularly for the combined action of the spring 21 and the elasticity of the lip 24, which compensate one another, the overall axial force exerted on the contact edge 24b remains substantially constant also in the event of slight changes of the axial position of the edge 24b. Above all, it has been noticed that the sealing action performed by the lip 24 is substantially constant as the sliding edge 24b is progressively worn, and is guaranteed also if the two shields 14 and 15 are not mounted perfectly parallel.

Furthermore, it will be appreciated that the sealing unit according to the invention offers the following advantages.

The unit has only one sealing gasket, and therefore requires vulcanization of only one of the two shields.

The static sealing lip 28, formed as a single piece with the gasket 22, allows to eliminate the conventional rubber film indicated at 29 in Figure 1. This simplifies and accelerates the step of assembling the sealing unit in the bearing and eliminates costs related to the manufacturing of the said film.

The covering layer 22c allows using a flinger 14 made of a material different from stainless steel, conventionally used. For example, a cheaper and non-inoxidable metal may be used, which will be protected by the layer 22c anyway.

By selecting a non-inoxidable material for the flinger 14, for example a non-stainless steel, adhesion of the rubber of gasket 22 to the flinger is improved. This increases the useful life, the efficiency and reliability of the sealing unit.

Possible rubber flashes resulting from vulcanizing the gasket 22 on the flinger 14 will be in a position (indicated at 27 in Figure 2) non visible from the outside. Therefore, the amount of production waste will be cut down drastically as compared to the past.

The invention is not intended to be limited to the embodiment described and illustrated herein, which should be considered as an example of an embodiment of the sealing unit. Rather, the invention may be modified with regard to the shape, dimensions and arrangement of parts, and to constructional and functional details and materials being used. For example, the thickness of the covering layer 22c may vary locally, for instance forming a number of small seats or notches (not shown) on the outer surface in order to facilitate gripping the gasket by means of mechanical tool used for fitting the sealing device between the races of the bearing.

## Claims

1. A sealing unit (10) for sealing an annular gap (11) between the races (12, 13) of a bearing for the hub of a motor vehicle wheel, particularly a heavy motor vehicle, the sealing unit (10) comprising:
- a first annular shield (15) mountable in a radially outer, rotatable bearing race (12),
- a second annular shield (14) mountable onto a radially inner, stationary bearing race (13),
wherein the first annular shield (15) has a substantially L-shaped cross-section with
- a cylindrical axial portion (25) fixable to a cylindrical axial surface (12a) of he outer race (12), and
- a radial wall (26) extending, when the sealing unit is in its assembled state in the bearing, from the axial cylindrical portion (25) towards the inner stationary bearing race (13), and wherein the second annular shield (14) has a substantially L-shaped cross-section with
- a cylindrical axial portion (19) fixable to a cylindrical axial surface (13a) of the inner race (13), and
- a radial wall (20) extending, when the sealing unit is in its assembled state in the bearing, from the cylindrical axial portion (19) towards the outer race (12) of the bearing, wherein the sealing unit comprises a single sealing gasket (22) of elastic material over-moulded or vulcanized onto the second shield (14) and forming, when the sealing unit is in its assembled state in the bearing, an axial sealing lip (24) that widens in extending from a root portion (24a) in a radially outer and axially inner inclined direction for slidingly contacting the radial wall (26) of the first shield (15) by means of a free end edge (24b); said axial sealing lip (24) having a radial groove (24c) around its outer circumference, said groove (24c) acting as a seat the sealing unit further comprising a circumferential spring (21) accommodated in for, said circumferential spring (21) there exerting on the lip (24), when the sealing unit is in its assembled state in the bearing, a radial compression (R) that is partly transferred as axial pressure (A) against the radial wall (26) owing to the inclination of the lip (24);
wherein
- the circumferential groove (24c) has a centre of curvature (C) substantially axially aligned with the contact edge (24b), when the sealing unit is in its assembled state in the bearing, and
- the root portion (24a) is made thin so as to form an elastic hinge with a centre of rotation (B) located on an ideal line (D) passing through the contact edge (24b) and forming an angle (α) ranging between about 20° and about 60° with respect to a radial plane (P), when the sealing unit is in its assembled state in the bearing.

2. A sealing unit according to claim 1, **characterised in that** said single sealing gasket (22) further forms a covering layer (22c) that covers continuously from the outside a radial surface (14a) of the second shield (14) on a side facing the outside of the bearing.

3. A sealing unit according to claim 1, **characterised in that** said single sealing gasket (22) further forms a radially inner portion (22b) having a further static sealing lip (28) projecting in a radially inner and axially outer direction so as to seal from the outside an interface zone between the axial cylindrical portion (19) of the second shield (14) and the axial cylindrical surface (13a) of the second race (13).

4. A sealing unit according to claim 1, **characterised in that** said single sealing gasket (22) further forms a radial sealing lip (23) extending in a radially outer direction so as to slide against the axial cylindrical portion (25) of the first shield (15).

5. A sealing unit according to claim 1, **characterised in that** the second annular shield (14) is made of a material different from stainless steel, preferably a non-stainless steel or another non-inoxidable metal.

## Patentansprüche

1. Dichtungseinheit (10) zum Abdichten einer ringförmigen Spalte (11) zwischen den Laufringen (12, 13) eines Lagers für die Nabe eines Kraftfahrzeugrads, insbesondere eines schweren Kraftfahrzeugs, wobei die Dichtungseinheit (10) Folgendes aufweist:
- eine erste ringförmige Abschirmung (15), die in einem radial äußeren, drehbaren Laufring (12) montierbar ist,
- eine zweite ringförmige Abschirmung (14), die auf einen radial inneren stationären Laufring (13) montierbar ist,
wobei die erste ringförmige Abschirmung (15) einen im Wesentlichen L-förmigen Querschnitt hat mit
- einem zylindrischen axialen Teil (25), der an einer zylindrischen axialen Oberfläche (12a) des äußeren Laufrings (12) befestigt werden kann, und
- einer radialen Wand (26), die sich, wenn die Dichtungseinheit in ihrem zusammengefügten Zustand in dem Lager ist, von dem axialen zylindrischen Teil (25) zu dem inneren stationären Laufring (13) erstreckt,
und wobei die zweite ringförmige Abschirmung (14) einen im Wesentlichen L-förmigen Querschnitt hat mit
- einem zylindrischen axialen Teil (19), der an einer zylindrischen axialen Oberfläche (13a) des Innenlaufrings (13) befestigt werden kann, und
- einer radialen Wand (20), die sich, wenn die Dichtungseinheit in ihrem zusammengefügten Zustand in dem Lager ist, von dem zylindrischen axialen Teil (19) zu dem äußeren Laufring (12) des Lagers erstreckt,
wobei die Dichtungseinheit eine einzige Dichtung (22) aus elastischem Material aufweist, das auf die zweite Abschirmung (14) abgeformt oder vulkanisiert ist und das, wenn die Dichtungseinheit in ihrem zusammengefügten Zustand in dem Lager ist, eine axiale Dichtlippe (24) bildet, die sich, während sie sich von einem Wurzelteil (24a) in eine radial äußere und axial innere schräge Richtung erstreckt, um gleitend die radiale Wand (26) der ersten Abschirmung (15) mittels einer freien Endkante (24b) zu berühren, erweitert, wobei die axiale Dichtlippe (24) eine radiale Hohlkehle (24c) um ihren äußeren Umfang hat, wobei die Dichtungseinheit ferner eine umfängliche Feder (21) aufweist, die in der Hohlkehle (24c) untergebracht ist, die dort als ein Sitz für die umfängliche Feder (21) wirkt, die auf die Lippe (24), wenn die Dichtungseinheit in ihrem zusammengefügten Zustand in dem Lager ist, eine radiale Kompression (R) ausübt, die teilweise als axialer Druck (A) gegen die radiale Wand (26) aufgrund der Neigung der Lippe (24) drückt,
wobei
- die umfängliche Hohlkehle (24c) eine Krümmungsmitte (C) hat, die im Wesentlichen axial mit der Kontaktkante (24b) in Berührung ist, wenn die Dichtungseinheit in ihrem zusammengefügten Zustand in dem Lager ist, und
- der Wurzelteil (24a) dünn gemacht ist, um ein elastisches Scharnier mit einer Drehmitte (B) zu bilden, die auf einer idealen Linie (D) liegt, die durch die Kontaktkante (24b) verläuft und einen Winkel (α) zwischen etwa 20° und etwa 60° in Bezug zu der radialen Ebene (P) bildet, wenn die Dichtungseinheit in ihrem zusammengefügten Zustand in dem Lager ist.

2. Dichtungseinheit nach Anspruch 1, **dadurch gekennzeichnet, dass** die einzige Dichtung (22) ferner eine Abdichtschicht (22c) bildet, die ununterbrochen von der Außenseite eine radiale Oberfläche (14a) der zweiten Abschirmung (14) auf einer Seite abdeckt, die zur Außenseite des Lagers gewandt ist.

3. Dichtungseinheit nach Anspruch 1, **dadurch gekennzeichnet, dass** die einzige Dichtung (22) ferner einen radial inneren Teil (22b) bildet, der eine weitere statische Dichtlippe (28) bildet, die in eine radial innere und axial äußere Richtung vorsteht, um von der Außenseite einen Schnittstellenbereich zwischen dem axialen zylindrischen Teil (19) der zweiten Abschirmung (14) und der axialen zylindrischen Oberfläche (13a) des zweiten Laufrings (13) zu bilden.

4. Dichtungseinheit nach Anspruch 1, **dadurch gekennzeichnet, dass** die einzige Dichtung (22) ferner eine radiale Dichtlippe (23) bildet, die sich in eine radial äußere Richtung erstreckt, um gegen den axialen zylindrischen Teil (25) der ersten Abschirmung (15) zu gleiten.

5. Dichtungseinheit nach Anspruch 1, **dadurch gekennzeichnet, dass** die zweite ringförmige Abschirmung (14) aus einem Material hergestellt ist, das von rostfreiem Stahl verschieden ist, vorzugsweise aus einem nicht rostfreien Stahl oder anderen nicht nichtoxidierbaren Stahl.

## Revendications

1. Moyen d'étanchéité (10) pour l'étanchéité d'un espace annulaire (11) entre les chemins de roulement (12, 13) d'un palier pour le moyeu d'une roue de véhicule automobile, en particulier d'un véhicule automobile poids-lourd, le moyen d'étanchéité (10) comprenant :
- un premier écran annulaire (15) pouvant être monté dans un chemin de roulement de palier rotatif radialement externe (12),
- un deuxième écran annulaire (14) pouvant être monté sur un chemin de roulement de palier stationnaire radialement interne (13),
le premier écran annulaire (15) ayant une section transversale essentiellement en forme de L avec
- une portion axiale cylindrique (25) pouvant être fixée à une surface axiale cylindrique (12a) du chemin de roulement externe (12), et
- une paroi radiale (26) s'étendant, lorsque le moyen d'étanchéité est dans son état assemblé dans le palier, depuis la portion axiale cylindrique (25) vers le chemin de roulement de palier stationnaire interne (13),
et le deuxième écran annulaire (14) ayant une section transversale essentiellement en forme de L avec
- une portion axiale cylindrique (19) pouvant être fixée à une surface axiale cylindrique (13a) du chemin de roulement interne (13), et
- une paroi radiale (20) s'étendant, lorsque le moyen d'étanchéité est dans son état assemblé dans le palier, depuis la portion axiale cylindrique (19) vers le chemin de roulement externe (12) du palier,
le moyen d'étanchéité comprenant une garniture d'étanchéité unique (22) en matériau élastique surmoulée ou vulcanisée sur le deuxième écran (14) et formant, lorsque le moyen d'étanchéité est dans son état assemblé dans le palier, une lèvre d'étanchéité axiale (24) qui s'élargit en s'étendant depuis une portion de base (24a) dans une direction radialement externe et axialement interne inclinée en vue d'un contact par glissement avec la paroi radiale (26) du premier écran (15) au moyen d'un bord d'extrémité libre (24b) ; ladite lèvre d'étanchéité axiale (24) ayant une gorge radiale (24c) autour de sa circonférence externe, le moyen d'étanchéité comprenant en outre un ressort circonférentiel (21) reçu dans ladite gorge (24c) servant de siège pour celui-ci, ledit ressort circonférentiel (21) exerçant sur la lèvre (24), lorsque le moyen d'étanchéité est dans son état assemblé dans le palier, une compression radiale (R) qui est partiellement transférée sous forme de pression axiale (A) contre la paroi radiale (26) en raison de l'inclinaison de la lèvre (24) ;
- la gorge circonférentielle (24c) ayant un centre de courbure (C) substantiellement aligné axialement avec le bord de contact (24b), lorsque le moyen d'étanchéité est dans son état assemblé dans le palier, et
- la portion de base (24a) étant fabriquée sous forme mince de manière à former une charnière élastique avec un centre de rotation (B) situé sur une ligne idéale (D) traversant le bord de contact (24b) formant un angle (α) compris entre environ 20° et environ 60° par rapport à un plan radial (P), lorsque le moyen d'étanchéité est dans son état assemblé dans le palier.

2. Moyen d'étanchéité selon la revendication 1, **caractérisé en ce que** ladite garniture d'étanchéité unique (22) forme en outre une couche de recouvrement (22c) qui recouvre en continu depuis l'extérieur une surface radiale (14a) du deuxième écran (14) sur un côté tourné vers l'extérieur du palier.

3. Moyen d'étanchéité selon la revendication 1, **caractérisé en ce que** ladite garniture d'étanchéité unique (22) forme en outre une portion radialement interne (22b) ayant une lèvre d'étanchéité statique supplémentaire (28) faisant saillie dans une direction radialement interne et axialement externe de manière à sceller depuis l'extérieur une zone d'interface entre la portion cylindrique axiale (19) du deuxième écran (14) et la surface cylindrique axiale (13a) du deuxième chemin de roulement (13).

4. Moyen d'étanchéité selon la revendication 1, **caractérisé en ce que** ladite garniture d'étanchéité unique (22) forme en outre une lèvre d'étanchéité radiale (23) s'étendant dans une direction radialement externe de manière à glisser contre la portion cylindrique axiale (25) du premier écran (15).

5. Moyen d'étanchéité selon la revendication 1, **caractérisé en ce que** le deuxième écran annulaire (14) est fabriqué en un matériau différent de l'acier inoxydable, de préférence un acier non inoxydable ou un autre métal non inoxydable.
